(19) Europäisches Patentamt

European Patent Office

Office européen des brevets

(11) EP 2 216 921 A2

(12) **EUROPEAN PATENT APPLICATION**

(43) Date of publication:
**11.08.2010 Bulletin 2010/32**

(51) Int Cl.:
***H04J 3/06*** *(2006.01)*

(21) Application number: **10075212.0**

(22) Date of filing: **31.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.08.2007 US 890379**

(62) Document number(s) of the earlier application(s) in accordance with Art. 76 EPC:
**08794959.0 / 2 186 215**

(71) Applicant: **Memorylink Corp.**
**Neenah, WI 54956 (US)**

(72) Inventor: **Freeburg, Thomas A**
**St. Charles,**
**Illinois 60175 (US)**

(74) Representative: **Clark, David Julian**
**Potter Clarkson LLP**
**Park View House**
**58 The Ropewalk**
**Nottingham NG1 5DD (GB)**

Remarks:
This application was filed on 25-05-2010 as a divisional application to the application mentioned under INID code 62.

(54) **Time division duplex (TDD)**

(57) In accordance with the principles of the present invention, a radio system is provided. A master multiplexer is adapted to receiving an input signal. A slave multiplexer is adapted to send an output signal A timing master radio is connected to the master multiplexer and a timing slave radio is connected to the slave multiplexer, with the timing master radio and the timing slave radio adapted to communicate over a wireless connection. The timing master radio and timing slave radio use complementary TDD frame structures controlled by the timing master radio, as is common in the art. The master multiplexer further comprising the timing mechanism that recovers timing embedded in the input signal, keeps track of the total number of bits received, and utilizes the total number of bits received thereby maintaining timing. The master multiplexer comprises a packet mechanism that generates a packet.

FIG. 1

EP 2 216 921 A2

**Description**

FIELD OF THE INVENTION

The invention relates generally to the wireless communication systems.

BACKGROUND OF THE INVENTION

The transmission of high-quality, low-latency multimedia, in the unlicensed wireless bands is known. One approach utilizes microprocessor- and DSP-based solutions; however, these approaches require that the problem be decomposed into small steps that are undertaken *in sequence,* thereby delaying the computation.

An improved approach is based on hardware, conventionally approached with an Application-Specific Integrated Circuit - an ASIC. This solution has several difficulties, stemming from the fact that the "masks" that are required to "cast" the silicon are complicated, time-consuming, and expensive. The expensive and drawn-out nature of then mask and silicon phases means that if the first chips don't work there's real trouble. Therefore, one checks, simulates, checks, simulates again; designs again sometimes taking one to two years in the process. In addition, there can be a real reluctance to attempt to include any additional customer features after the design process has begun for fear of further increasing the risk.

All this time and expense means that once an ASIC is in production, it has to stay on the market unchanged for long enough to recover development costs and return a profit. An improved approach is based on reprogrammable hardware, commonly called field programmable logic arrays. This approach enables the implementation of a class of solutions that partitions a problem into many small steps that are undertaken *in parallel* by fast, optimally-configured hardware - hardware that is specifically shaped to the problem. Thus, this approach evolves without changing the hardware as each step focuses on the software that defines the solution. Since new software is easily applied to the reprogrammable hardware - even in the field - evolution can proceed at a rate that is measured in months rather than years. This also results in scalability with much greater dimension, resulting in agile, interactive systems that shift the power from the product to the user.

A particular benefit to the use of reprogrammable hardware occurs in video compression. In this, a wavelet-based algorithm breaks the compression process into many small steps that can be taken in parallel, making it ideal for implementation in reprogrammable hardware architecture. The speed of this process makes it possible to greatly reduce the required data transmission rate without adding the delays that conventional schemes such as MPEG require: a reprogrammable hardware -based implementation can transfer compressed video at reasonable data rates with an end-to-end delay that is well within human reaction time. This further allows control over the parameters of the compression/decompression process. Bits per frame, frame rate, and detail level are all controllable, allowing the reprogrammable hardware to be precisely fitted to the application.

Another important use is in the carriage of conventional telephony Time-Division-Multiplex (TDM) information. The demands of this use are severe, as the long history of the telephone network has driven technical standards to a high point. Such parameters as reliability, bit error rate, timing accuracy, and variation in delivery time are quite beyond that commonly available from wireless equipment designed for the delivery if Internet service; that is, Internet Protocol (IP) Wireless equipment.

As is understood by one of ordinary skill, there as a fair body of art in the area of Time Division Multiplex over Internet Protocol (TDMoIP), but the majority of that art is focused on IP links that are carried over physical media, such as fiber, DSL, and coaxial cable, which are all quite different that wireless, which presents a variety of characteristics that are quite different than those of the physical media.

Many wide-band Internet Protocol (IP) radio systems today use the Time Division Duplex (TDD) method as known in the art. In a TDD system a common carrier is shared between the uplink and downlink, the resource being switched in time. Users are allocated one or more timeslots for uplink and downlink transmission. The main advantage of TDD operation is that it allows asymmetric flow which is more suited to data transmission. When coupling a multiplexer such as is used for Time Division over IP (TDMoIP) to such a radio system, it is useful for the multiplexer to know three parameters: 1) the TDD "frame" rate; 2) the absolute point in each frame where useful data packets start being delivered to the other end; and 3) the "over the air" data rate used by the wireless link. What would be advantageous would be a system and method to better measure the TDD "frame" rate, determine the absolute point in each frame where useful data packets start being delivered to the other end; and measure the "over the air" data rate used by the wireless link.

SUMMARY OF THE INVENTION

A system and method in accordance with the principles of the present invention better measures the TDD "frame" rate, determines the absolute point in each frame where useful data packets start being delivered to the other end, and measures the "over the air" data rate used by the wireless link. In accordance with the principles of the present invention, a radio system is provided. A master multiplexer is adapted to receive an input signal. A slave multiplexer is adapted to send an output signal. A timing master radio is connected to the master multiplexer and a timing slave radio is connected to the slave multiplexer, with the timing master radio and the timing slave radio adapted to communicate over a wireless connection. The timing master radio and timing slave radio use complementary TDD frame structures, controlled by the timing master radio, as is common in the art. The master multiplexer further comprising a timing mechanism that recovers timing embedded in the input signal, keeps track of the total number of bits received, and utilizes the total number of bits received thereby maintaining timing. The master multiplexer comprises a packet mechanism that generates a packet. The master multiplexer also provides a method for determining the TDD frame size and phase, and measuring over-the-air data rate of a radio channel.

BRIEF DESCRIPTION OF THE DRAWINGS

Figure 1 is a block diagram of an example wireless communications system in accordance with the principles of the present invention.
Figure 2 is a schematic of the details of the master multiplexer of Figure 1.
Figure 3 is a schematic of a packet constructed by the master multiplexer of Figure 2.
Figure 4 is a timing chart showing the timing of the packet of Figure 3.
Figure 5 shows the timing of a first packet and a second packet in accordance with the principles of the present invention.

DETAILED DESCRIPTION OF AN EMBODIMENT OF THE INVENTION

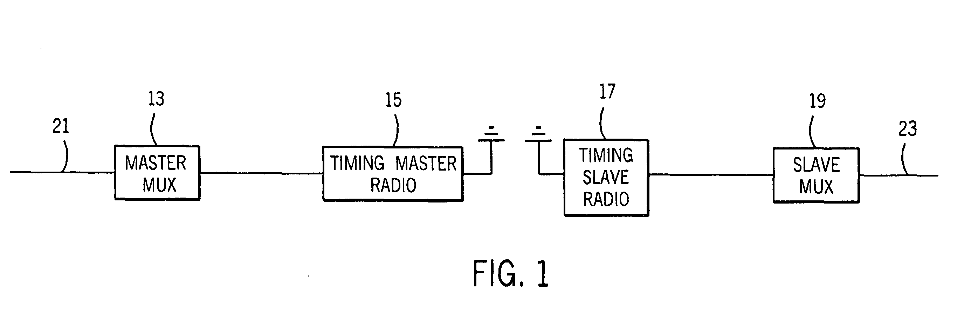

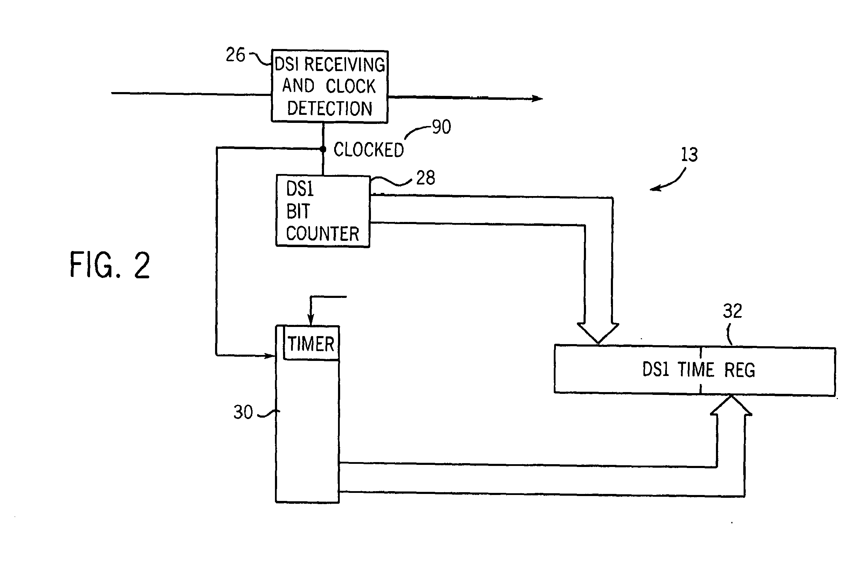

Many wide-band Internet Protocol (IP) radio systems today use the Time Division Duplex (TDD) method as known in the art. When coupling a multiplexer such as is used for Time Division Multiplex over IP (TDMoIP) to such a radio system, it is useful for the multiplexer to know three parameters: 1) the TDD "frame" rate; 2) the absolute point in each frame where useful data packets start being delivered to the other end; and 3) the "over the air" data rate used by the wireless link.
Referring to Figure 1, an example subject radio system is seen. A "master multiplexer" 13, a timing master radio 15, a timing slave radio 17, and a slave multiplexer 19 can be provided. The timing master radio 15 is connected to the master multiplexer 13 via for example an IP connection. The master multiplexer 13 receives signals from a "master" DS1 connection 21. The timing slave radio 17 is connected to the slave multiplexer 19 via for example an IP connection. The slave multiplexer 19 sends a signal over a DS1 connection 23. The timing master radio 15 and the timing slave radio 17 communicate over a wireless (radio) connection.
Using the TDD method, a single frequency channel can be assigned to both the transmitter and the receiver. Both the uplink (UL) and downlink (DL) traffic use the same frequency but at different times; in effect, TDD divides the data stream into frames and, within each frame, assigns different time slots to the forward and reverse transmissions. This allows both types of transmissions to share the same transmission medium (i.e., the same radio frequency), while using only the part of the bandwidth required by each type of traffic.
Referring to Figure 2, detail on the master multiplexer 13 is seen. The master multiplexer 13 includes timing and packet mechanisms. A DS1 receiving and clock detection mechanism 26, a DS1 bit counter 28, a local timer 30, and a stable timing source such as for example a DS 1 time register 32 can be provided. The DS1 receiving and clock detection mechanism 26 recovers the timing, for example a 2.048 MHz or 1.544 MHz clock embedded in the DS1 bit stream, using mechanisms known by one skilled in the art; for instance, according to the integrated circuit description for the IDT 82V2082 chip available from Integrated Device Technology, Inc., 6024 Silver Creek Valley Road, San Jose, CA 95138. The recovered clock signal is passed to two elements in the DS1 timing mechanism: first, the DS1 bit counter 28 keeps track of the total number of bits received into the DS1 interface. The DS1 bit counter 28 is used for relative measurements, so it can be allowed to "roll over" when its upper limit is reached; logic at the receiving end of the system notices the rollover and accounts for it so that the relative time information is not distorted.
Second, the DS1 clock impulses are fed into the reset input of the local timer 30, whose 'count' input is a local clock of frequency sufficiently high to maintain the overall timing accuracy needed, for example 50 MHz resulting in a timing accuracy of 20 nanoseconds.
When DS1 time is needed by the packet generation to be described below, these two numbers are read into the DS time register 32 as a single 2-element register, whose high-order portion is the total number of DS1 bits received since system initiation, and whose low-order portion is the number of local clock intervals (20 nanosecond intervals in this example) that have elapsed since the last DS1 clock impulse was received. In this way precise timing can be maintained, since the DS1 signal is normally controlled by a very accurate clock in the telephone network, and the local clock is used only within a single DS1 bit interval.

The operating sequence can be thought of in multiple phases.

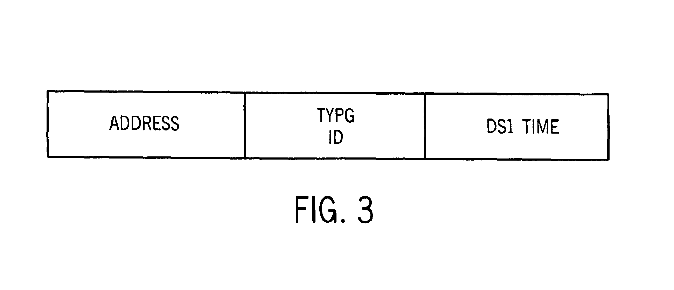

During phase 1, the master multiplexer 13 determines the TDD frame size and phase; that is, the length of the total TDD frame and the point at which the TDD frame switches from transmit to receive. To start with, the master multiplexer 13 makes a packet according to Figure 3, containing an address that points to the slave multiplexer 19, a type identifier defining the packet as a frame discovery packet, and the current DS1 time as described earlier. The master multiplexer 13 then transmits this frame discovery packet to the slave multiplexer 19 over the wireless channel as seen in Figure 1, using the maximum priority setting available to the radio, so that the radio will prioritize this frame discovery packet over other data it might have to transmit.

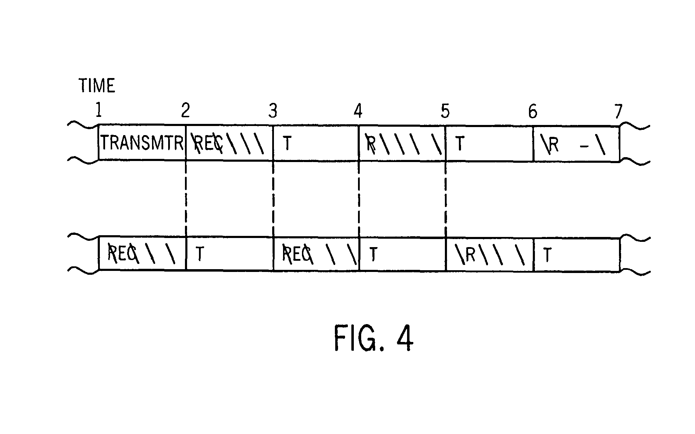

When the slave multiplexer 19 receives the frame discovery packet, the slave multiplexer 19 immediately "echoes" the frame discovery packet; that is, the slave multiplexer 19 transmits the frame discovery packet back to the master multiplexer 13, leaving the time and priority fields undisturbed. Note that this echoed packet will be received by the master multiplexer 13 at the beginning of its receive interval, independent of when the packet being responded to was presented to the timing master radio 15 for transmission. This can be seen by examining Figure 4, where the timing master radio 15 is depicted in the top timing chart and the timing slave radio 17 is depicted in the bottom timing chart. Note that if the initial packet is presented to the master radio during the interval between time 2 and time 3, the initial packet will not be transmitted until the transmission interval begins at time 3; if the initial packet is presented to the master radio at between time 3 and time 4, it will be transmitted immediately. In either case, the timing slave radio will return the packet at time 4, that being the start of its first transmit cycle after receiving the initial packet.

At the instant that the master multiplexer 13 receives the echoed packet, the master multiplexer 13 records the DS1 time of receipt, read in the same manner from the DS1 time register 32 as that put into the packet initially. The master multiplexer 13 now has the first point of reference needed to determine the TDD frame size. The master multiplexer 13 now immediately sends a second probe packet to the slave multiplexer 19, using the current DS1 time. Note that the master multiplexer 13 knows that this second probe packet always leaves the timing master radio 15 at the beginning of its transmit cycle; for instance, if the timing master radio 15 receives the first echoed packet at time 4 or shortly thereafter, the master multiplexer 13 will present the second probe packet to the timing master radio 15 during the interval between time 4 and time 5, and the timing master radio 15 will transmit it at the beginning of its next transmit cycle; that is, at time 5. The timing slave radio 17 will then transmit the corresponding echo at time 6.

The master multiplexer 13 will record the time it receives this second echo packet in the same manner as it did the first; the time difference between the time of receipt of the first and second packets is the TDD frame size of the radio system, and the echo packet marks the start of the receive frame of the timing master radio 15. The system can now move to the second phase, that of measuring over-the-air data rate of the radio channel, while continuing to monitor the frame rate as above.

In phase 2, the master multiplexer 13 first determines the data rate of the IP link between itself and timing master radio. Note that this link must be sensibly faster than the over-the-air rate; this is normally the case, as slower rates do not make sense. The master multiplexer 13 can determine this rate directly by examining its own control registers for this link. For purposes of this example, assume that this "wire" data rate is 100 megabits per second (mbps).

The master multiplexer 13 now sends a command to the slave multiplexer 19 to respond with data rate determining packets. The slave multiplexer 19 responds with two packets addressed to the master multiplexer 13. Note that the command may in the form of a single packet, or may simply be two packets as used in the earlier phase 1. In fact, in one embodiment the response of the slave multiplexer 19 to the command in the earlier phase 1 may always be two packets, making the implementation somewhat simpler.

The master multiplexer 13 records the time of receipt of the each of the two packets, as before, subtracting the two times to get the time occupied on the RF link buy the second packet. Note that the two packets must be the same size for this computation to work. In order to account for the fact that the overhead bytes over the radio link may be larger than that over the wire (the IP link), the master multiplexer 13 may now command the slave multiplexer 19 to send the next pair of responses with a significantly larger (or smaller) number of data bytes. The transmission time of the second packet in this pair will now be known, allowing the master multiplexer 13 to determine the precise time occupied by the additional data bytes. With that information and the known length of the data portion of both type of message, the master multiplexer 13 may now compute the precise marginal data rate of the radio link, as well as its associated overhead.

In one embodiment, the slave multiplexer 19 may also determine the same information as the master multiplexer 13 by reference to the time of receipt of the packets from the master multiplexer 13. Note also that it is not necessary to use the time information put into the packets for the purposes described above, but it may be useful in other parts of the system, for instance in keeping the DS1 line in the slave multiplexer 19 in step with that in the master. Note also that, in alternative embodiments the DS time register 32 counting total DS1 bits in the master multiplexer 13 may be replaced with any stable timing source, for instance with an oscillator synchronized to the GPS system, which is know to be capable of providing time references stable to nanoseconds.

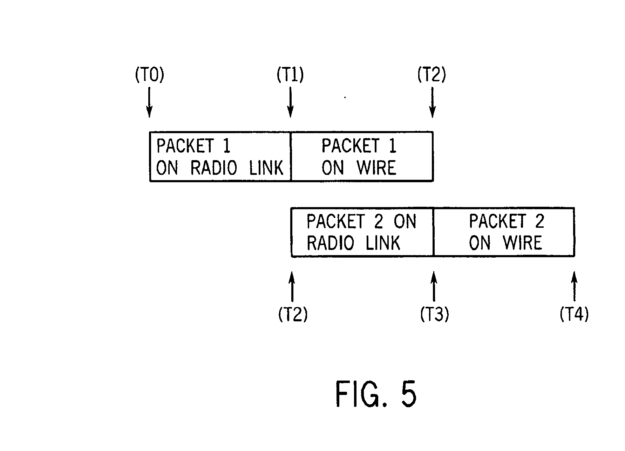

Referring now to Figure 5, the length of time that a packet spends in the air can be found by the equation:

$$\text{Time in Air} = (\text{Radio Overhead Bytes} + \text{Packet Content Bytes}) * 8 / (\text{Radio Data Rate})$$

Similarly, the time on the wire is given by:

$$\text{Time on Wire} = (\text{Wire Overhead Bytes} + \text{Packet Content Bytes}) * 8 / (\text{Wire Data Rate})$$

Since the only unknown in the above equations is the Radio Data Rate, it can easily be determined from these equations; indeed, if the radio overhead is not known, then the experiment can simply be repeated using packets containing a substantially different number of data bytes; the difference in arrival times is only due to the time in the air of the additional bytes, allowing the effective data rate over the air to be accurately established, and by reference to the initial measurement, the overhead of the RF link may be easily calculated.

Another way to understand the principles of the present invention is seen in Figure 5. Note that the beginning of the second packet on the radio channel is immediately following the end of the first packet. In Figure 5, this time is shown as $T_1$, transmission of the first packet having been initiated at To. As long as the two packets are the same size, the difference between the end of the first packet on the wire at $T_2$ and the end of second packet on the wire at $T_4$ (these being the only events that the master multiplexer can directly observe) corresponds to the length of either of the packets on the radio link.

As is seen, surprisingly the radio data rate and the radio overhead can be simply determined from these tests. This is a great benefit in systems that must keep very accurate timing stability, and aids greatly in solving problems associated with supporting high-reliability, very accurate bit flows over wireless links that are not of themselves capable of delivering the required quality of service.

While the invention has been described with specific embodiments, other alternatives, modifications and variations will be apparent to those skilled in the art. All such alternatives, modifications and variations are intended to be included within the spirit and scope of the appended claims.

## Claims

1. A radio system comprising:

   a master multiplexer adapted to receiving an input signal;
   a slave multiplexer adapted to send an output signal;
   a timing master radio connected to the master multiplexer;
   a timing slave radio connected to the slave multiplexer, the timing master radio and the timing slave radio adapted to communicate over a wireless connection, the timing master radio and timing slave radio using complementary TDD frame structures, controlled by the timing master radio;
   the master multiplexer further comprising a timing mechanism that recovers timing embedded in the input signal, keeps track of the total number of bits received, and utilizes the total number of bits received thereby maintaining timing;
   the master multiplexer comprising a packet mechanism that generates a packet; and
   the master multiplexer further determining the TDD frame size.

2. The radio system of clause further wherein the master multiplexer determines the TDD phase.

3. The radio system of clause 1 further wherein the master multiplexer measures over-the-air data rate of a radio channel.

4. The radio system of clause 1 further wherein a single frequency channel is assigned to both the timing master radio and the timing slave radio.

5. The radio system of clause 1 further wherein the data stream is divided into frames and, within each frame, different time slots to the forward and reverse transmissions.

6. The radio system of clause 1 further wherein the packet mechanism determines the TDD frame size by generating a frame discovery packet containing time and priority fields; transmitting the packet; upon receipt of the frame discovery packet, echoing the frame discovery packet, leaving the time and priority fields undisturbed; when the echoed packet is received, recording the time of receipt, whereby establishing a first point of reference to determine the TDD frame size; sending a second probe packet using the current time; upon receipt of the second probe packet, again echoing the second probe packet, again leaving the time and priority fields undisturbed; recording the time the second echo packet is received; and computing the time difference between the time of receipt of the first and second packets as the TDD frame size of the radio system.

**7.** The radio system of clause 1 further wherein the master multiplexer timing mechanism comprises a DS1 receiving and clock detection mechanism that recovers timing embedded in the DS1 bit stream, a DS1 bit counter that keeps track of the total number of bits received into the DS1 interface and into the reset input of a local timer, the local timer, and a DS time register that generates a packet, utilizing the total number of bits received into the DS1 interface and into the reset input of the local timer.

**8.** The radio system of clause 1 further wherein the total number of bits received into the DS1 interface and into the reset input of the local timer are read into the DS time register as a single 2-element register.

**9.** The radio system of clause 1 further including the slave multiplexer determining the same information as the master multiplexer by reference to the time of receipt of the packets from the master multiplexer.

**10.** A radio system comprising:

> a master multiplexer adapted to receiving an input signal;
> a slave multiplexer adapted to send an output signal;
> a timing master radio connected to the master multiplexer;
> a timing slave radio connected to the slave multiplexer, the timing master radio and the timing slave radio adapted to communicate over a wireless connection, the timing master radio and timing slave radio using complementary TDD frame structures, controlled by the timing master radio;
> the master multiplexer further comprising the timing mechanism that recovers timing embedded in the input signal, keeps track of the total number of bits received, and utilizes the total number of bits received thereby maintaining timing; and
> the master multiplexer further measuring over-the-air data rate of a radio channel.

**11.** The radio system of clause 10 further wherein the master multiplexer determines the TDD frame size.

**12.** The radio system of clause 10 further wherein the master multiplexer determines the TDD phase.

**13.** The radio system of clause 10 further including the master multiplexer comprising a packet mechanism that determines the TDD phase.

**14.** The radio system of clause 10 further wherein a single frequency channel is assigned to both the timing master radio and the timing slave radio.

**15.** The radio system of clause 10 further wherein the data stream is divided into frames and, within each frame, different time slots to the forward and reverse transmissions.

**16.** The radio system of clause 10 further wherein the packet mechanism measures over-the-air data rate of a radio channel by determining the data rate of a wired link; sending a command to respond with data rate determining packets; upon receipt of the command, sending the data rate determining packets; and recording the time of receipt of the each of the two packets and subtracting the two times to get the time occupied on the wireless link by the second packet.

**17.** The radio system of clause 10 further wherein the master multiplexer timing mechanism comprises a DS1 receiving and clock detection mechanism that recovers timing embedded in the DS1 bit stream, a DS1 bit counter that keeps track of the total number of bits received into the DS1 interface and into the reset input of a local timer, the local timer, and a DS time register that generates a packet, utilizing the total number of bits received into the DS1 interface and into the reset input of the local timer.

**18.** The radio system of clause 10 further wherein the total number of bits received into the DS1 interface and into the reset input of the local timer are read into the DS time register as a single 2-element register.

19. The radio system of clause 10 further including the slave multiplexer determining the same information as the master multiplexer by reference to the time of receipt of the packets from the master multiplexer.

20. A method of determining TDD frame size and phase of a radio system, comprising:

generating a frame discovery packet containing time and priority fields;
transmitting the packet;
upon receipt of the frame discovery packet, echoing the frame discovery packet, leaving the time and priority fields undisturbed;
when the echoed packet is received, recording the time of receipt, whereby establishing a first point of reference to determine the TDD frame size;
sending a second probe packet using the current time;
upon receipt of the second probe packet, again echoing the second probe packet, again leaving the time and priority fields undisturbed;
recording the time the second echo packet is received; and
computing the time difference between the time of receipt of the first and second packets as the TDD frame size of the radio system.

21. The method of determining TDD frame size and phase of a radio system of clause 20 further including the echo packet marking the start of the receive frame of the timing master radio.

22. The method of determining TDD frame size and phase of a radio system of clause 20 further including transmitting the packet using a priority setting.

23. The method of determining TDD frame size and phase of a radio system of clause 20 further including receiving the echoed packet at the beginning of its receive interval, independent of when the packet being responded to was presented for transmission.

24. The method of determining TDD frame size and phase of a radio system of clause 20 further including measuring over-the-air data rate of an IP radio channel.

25. The method of determining TDD frame size and phase of a radio system of clause 24 further including utilizing the over-the-air data rate of an IP radio channel and the TDD frame size, computing the marginal data rate of the radio link as well as its associated overhead.

26. A method of measuring over-the-air data rate of a radio channel, comprising;
determining the data rate of a wired link;
sending a command to respond with data rate determining packets;
upon receipt of the command, sending the data rate determining packets; recording the time of receipt of the each of the two packets and subtracting the two times to get the time occupied on the wireless link by the second packet.

27. The method of measuring over-the-air data rate of a radio channel of clause 26 further including determining the over-the-air data rate directly by examining control registers for this link.

28. The method of measuring over-the-air data rate of a radio channel of clause 26 further including sending a command in the form of a single packet.

29. The method of measuring over-the-air data rate of a radio channel of clause 26 further including sending a command in the form of two packets.

30. The method of measuring over-the-air data rate of a radio channel of clause 26 further including the data rate determining packets being of the same size.

31. The method of measuring over-the-air data rate of a radio channel of clause 26 further including accounting for overhead bytes over the wireless link being larger than for overhead bytes over the wire by sending the echo with a larger or smaller number of data bytes.

**32.** The method of measuring over-the-air data rate of a radio channel of clause 26 further including determining TDD frame size and phase of a radio system.

**33.** The method of measuring over-the-air data rate of a radio channel of clause 32 further including, utilizing the time occupied on the wireless link by the second packet and the TDD frame size, computing the marginal data rate of the radio link as well as its associated overhead.

**Statement under Art. 19.1 PCT**

**1.** A radio system comprising:

a master multiplexer adapted to receiving an input signal;
a slave multiplexer adapted to send an output signal;
a timing master radio connected to the master multiplexer;
a timing slave radio connected to the slave multiplexer, the timing master radio and the timing slave radio adapted to communicate over a wireless connection, the timing master radio and timing slave radio using complementary TDD frame structures, controlled by the timing master radio;
the master multiplexer further comprising the timing mechanism that recovers timing embedded in the input signal, keeps track of the total number of bits received, and utilizes the total number of bits received thereby maintaining timing; and
the master multiplexer further measuring over-the-air data rate of a radio channel.

2. The radio system of claim 1 further wherein the master multiplexer determines the TDD frame size and/or the TDD phase.

3. The radio system of claim 1 further including the master multiplexer comprising a packet mechanism that determines the TDD phase.

4. The radio system of claim 1 further wherein a single frequency channel is assigned to both the timing master radio and the timing slave radio.

5. The radio system of claim 1 further wherein the data stream is divided into frames and, within each frame, different time slots to the forward and reverse transmissions.

6. The radio system of claim 10 further wherein the packet mechanism measures over-the-air data rate of a radio channel by determining the data rate of a wired link; sending a command to respond with data rate determining packets; upon receipt of the command, sending the data rate determining packets; and recording the time of receipt of the each of the two packets and subtracting the two times to get the time occupied on the wireless link by the second packet.

7. The radio system of claim 1 further wherein the master multiplexer timing mechanism comprises a DS1 receiving and clock detection mechanism that recovers timing embedded in the DS1 bit stream, a DS1 bit counter that keeps track of the total number of bits received into the DS1 interface and into the reset input of a local timer, the local timer, and a DS time register that generates a packet, utilizing the total number of bits received into the DS1 interface and into the reset input of the local timer.

8. The radio system of claim 1 further wherein the total number of bits received into the DS1 interface and into the reset input of the local timer are read into the DS time register as a single 2-element register.

9. The radio system of claim 1 further including the slave multiplexer determining the same information as the master multiplexer by reference to the time of receipt of the packets from the master multiplexer.

10. A method of measuring over-the-air data rate of a radio channel, comprising;
determining the data rate of a wired link;
sending a command to respond with data rate determining packets;
upon receipt of the command, sending the data rate determining packets;
recording the time of receipt of the each of the two packets and subtracting the two times to get the time occupied on the wireless link by the second packet.

11. The method of measuring over-the-air data rate of a radio channel of claim 10 further including determining the over-the-air data rate directly by examining control registers for this link.

12. The method of measuring over-the-air data rate of a radio channel of claim 10 further including sending a command in the form of a single packet or two pockets.

13. The method of measuring over-the-air data rate of a radio channel of claim 10 further including the data rate determining packets being of the same size.

14. The method of measuring over-the-air data rate of a radio channel of claim 10 further including accounting for overhead bytes over the wireless link being larger than for overhead bytes over the wire by sending the echo with a larger or smaller number of data bytes.

15. The method of measuring over-the-air data rate of a radio channel of claim 10 further including determining TDD frame size and phase of a radio system.

16. The method of measuring over-the-air data rate of a radio channel of claim 15 further including, utilizing the time occupied on the wireless link by the second packet and the TDD frame size, computing the marginal data rate of the radio link as well as its associated overhead.

21  MASTER MUX  13

TIMING MASTER RADIO  15

TIMING SLAVE RADIO  17

SLAVE MUX  19  23

FIG. 1

FIG. 2

| ADDRESS | TYPG ID | DS1 TIME |
|---------|---------|----------|

FIG. 3

TIME

| | 1 | | 2 | | 3 | | 4 | | 5 | | 6 | | 7 |
|---|---|---|---|---|---|---|---|---|---|---|---|---|---|

| TRANSMTR | REC \\\ | T | R\\\ \ | T | \R - \ |
|---|---|---|---|---|---|

| REC \ \ | T | REC \ \ | T | \R\\ \ | T |
|---|---|---|---|---|---|

EP 2 216 921 A2

FIG. 4

FIG. 5